# EUROPÄISCHE PATENTSCHRIFT

(11) **EP 2 379 321 B1**
(45) Veröffentlichungstag und Bekanntmachung des Hinweises auf die Patenterteilung: **16.04.2014**
(21) Anmeldenummer: 09802135.5
(22) Anmeldetag: 21.12.2009
(51) Int. Cl.: B32B 3/02, A47B 96/20, B32B 3/12, B32B 21/00

(54) **BAUTEIL, INSBESONDERE LEICHTBAUPLATTE**
COMPONENT, IN PARTICULAR LIGHTWEIGHT PANEL
ÉLÉMENT DE CONSTRUCTION, EN PARTICULIER PANNEAU SANDWICH

(30) Priorität: 16.01.2009 DE 102009005316
(43) Veröffentlichungstag der Anmeldung: 26.10.2011
(73) Patentinhaber: Fritz Egger GmbH & Co. OG, 3105 Unterradlberg (AT)
(72) Erfinder: BECKMANN, Michael, 59872 Meschede-Freienohl (DE)
(74) Vertreter: Cohausz & Florack
(86) Internationale Anmeldenummer: PCT/EP2009/067649
(87) Internationale Veröffentlichungsnummer: WO 2010/081615

(56) Entgegenhaltungen:
- EP-A2- 2 093 031
- WO-A1-03/084740
- WO-A1-2008/019929
- DE-A1- 2 945 752
- DE-A1-102004 053 881
- DE-U1- 8 017 134
- DE-U1- 20 314 832

## Beschreibung

Die Erfindung betrifft eine Leichtbauplatte mit einer Oberseite, einer Unterseite und mehreren Schmalseiten, enthaltend eine obere Decklage, eine untere Decklage, und eine zwischen der oberen Decklage und der unteren Decklage angeordnete Mittellage, wobei an zumindest einer der Schmalseiten des Bauteils die Stirnkanten der unterhalb der oberen Decklage angeordneten Lagen zumindest abschnittsweise gegenüber der Stirnkante der oberen Decklage zur Mitte des Bauteils hin zurückgesetzt sind und wobei die Stirnkanten der unterhalb der oberen Decklage angeordneten Lagen jeweils beschichtet sind.

Der Einsatz von Leichtbauplatten (LBPL) im Innenausbau ist aus der Verwendung im Türenbau seit geraumer Zeit bekannt. In letzter Zeit hat die Leichtbauplatte aber auch im Küchenausbau verstärkt an Bedeutung gewonnen. Der Grund liegt hier einerseits in den vielfältigen Gestaltungsmöglichkeiten, die sich aufgrund der hohen Bauteildicken erzielen lassen, und zum Anderen am geringen Gewicht, was den Transport und die Montage der daraus hergestellten Arbeitsplatten wesentlich erleichtert.

Mehrere Arbeitsgänge sind für die Herstellung einer als Küchenarbeitsplatte einsetzbaren Leichtbauplatte notwendig, die häufig sogar von Hand ausgeführt werden. Zunächst muss ein Rahmen hergestellt werden, eventuell mit mehreren Querriegeln, auf den dann die Decklagen aufgebracht werden. Zwischen den Decklagen werden Leichtfaserplatten, mineralische Dämmwolle, Kartonwaben oder ähnliches eingebracht. Damit wird dem Element mehr Kompaktheit und eventuell auch eine verbesserte Stabilität verliehen. Zumeist müssen in separaten Arbeitsgängen die Deckschichten auch noch oberflächenbehandelt werden. So sind als Decklagen furnierte oder anderweitig beschichtete Hartfaserplatten bekannt, wobei das fertige Element dann erst durch abschließendes Lackieren seine endgültige Oberfläche erhält.

In jüngster Zeit werden Leichtbauplatten für den Einsatz als Arbeitsplatten in zunehmendem Maß auch industriell gefertigt. Dazu wird eine leichte Mittellage mit Decklagen versehen, zumeist durch Klebung, so dass ein großformatiger Verbund entsteht.

Je nach geforderter Stabilität der Platte werden unterschiedlich dicke Decklagen, zumeist aus einem Holzwerkstoff wie Span- oder Faserplatte, eingesetzt. Die verwendeten Platten können bereits beschichtet sein, also etwa mit einem Laminat, einer Farbe, einem Druck mit Versiegelung, einer Melaminharzschicht, einem Furnier, etc. versehen sein.

Als Mittellagen werden bei Leichtbauplatten im Allgemeinen oder Schaumstoffplatten bevorzugt. Für bestimmte Verwendungszwecke sind möglicher Weise auch Wabenmaterialien aus anderen Materialien als Papier oder Karton sinnvoll. So können dafür dünnste Plattenmaterialien oder auch dünnwandiges Metall, beispielsweise aus Aluminium eingesetzt werden. Es ist aber auch möglich als Mittellagen leichte Holzwerkstoffe wie etwa entsprechende Spanplatten oder Faserplatten oder auch Massivholz geringer Dichte, wie Balsaholz, einzusetzen. Mit entsprechenden Ausnehmungen versehen sind grundsätzlich alle Materialien zum Einsatz als leichte Mittellage möglich. So werden dafür beispielsweise auch Holzarten herangezogen, die zwar nicht ein besonders geringes Gewicht aufweisen, dafür aber gut verfügbar sind und sich gut mit zerspanenden Werkzeugen bearbeiten lassen. Auch sind leichte Mittellagen aus Halmbündeln, die miteinander verbunden zu flächigen Gebilden aufgeschnitten werden, sodass dann die Länge der Halmabschnitte der Dicke der Mittellage entspricht, bekannt.

Bei. Küchenarbeitsplatten ist häufig eine relativ dünne Optik gewünscht, die eine Leichtbauplatte mit dem zuvor beschriebenen Aufbau nicht erfüllen kann. Holzwerkstoffe weisen dafür in der Regel nicht die ausreichende Stabilität auf, weswegen üblicherweise auf eher teure Granit- oder Compaktplatten zurückgegriffen wird.

Eine Leichtbauplatte mit einer oberen Decklage, einer unteren Decklage und einer dazwischen angeordneten Mittellage, bei der die Mittellage und die untere Decklage so ausgebildet sind, dass deren Stirnkanten gegenüber der Stirnkante der oberen Decklage zur Mitte des Bauteils hin zurückgesetzt sind, ist beispielsweise bekannt aus der DE 80 17 134 U1, der DE 29 45 752 A1 und der WO 03/084740 A1. Ein mehrlagiges plattenförmiges Zwischenprodukt, welches den zuvor beschriebenen Aufbau hat, ist weiterhin bekannt aus der DE 10 2004 053 881 A1 und der WO 2008/019929 A1. Gemäß der WO 03/084740 A1 können auch zumindest einige der unterhalb der oberen Decklage angeordneten Lagen beschichtet sein. In letzterem Fall handelt es sich bei der Beschichtung um ein Laminat, welches vollflächig aufgebracht ist und neben einer optischen Funktion auch die Funktion eines Gelenks im Kantenbereich hat.

Es ist daher die Aufgabe der vorliegenden Erfindung, eine Leichtbauplatte zu schaffen, die eine Alternative zum vorangehend beschriebenen Stand der Technik bereitstellt.

Die zuvor hergeleitete und aufgezeigte Aufgabe wird bei einer Leichtbauplatte der eingangs genannten Art dadurch gelöst, dass die Beschichtung von einem LED-Band oder einem integrierte LEDs aufweisenden Profil gebildet wird. Mit den unterhalb der oberen Decklage angeordneten Lagen sind die übrigen Lagen im Plattenaufbau gemeint, die also bei einer horizontalen Ausrichtung des Bauteils, das heißt der Leichtbauplatte, vertikal unter der oberen Decklage angeordnet sind. Die Stirnkanten der unterhalb der oberen Decklage angeordneten Lagen brauchen nicht zwangsläufig vollständig, das heißt über die gesamte Breite bzw. Länge des Bauteils, zurückgesetzt sein, sondern können im Bedarfsfall auch nur in einem oder mehreren Abschnitten zurückgesetzt sein. Es sei darauf hingewiesen, dass der Versatz zwischen der Stirnkante der oberen Decklage und der Stirnkante der Mittellage nicht identisch mit dem Versatz zwischen der Stirnkante der oberen Decklage und der Stirnkante der unteren Decklage sein muss. Im Gegenteil, die Stirnkante der Mittellage kann auch weiter oder weniger weit als die Stirnkante der unteren Decklage zurückgesetzt sein.

Indem die Stirnkanten der übrigen Lagen des Bauteils, bei dem es sich auch um eine mehrlagige Holzwerkstoffplatte mit einer Mittellage aus vorzugsweise Vollspan handeln kann, zurückgesetzt sind, die obere Decklage also gegenüber diesen übrigen Lagen nach außen hervorsteht, d.h. einen Überstand hat, wird die Optik einer relativ dünnen Arbeitsplatte erzielt. Vorzugsweise wird das Bauteil so eingebaut oder verkleidet bzw. beschichtet - letzteres wird im Folgenden noch näher erläutert -, dass im bestimmungsgemäß eingebauten Zustand des Bauteils nur noch die obere Decklage sichtbar ist bzw. als Arbeitsplatte vom Benutzer wahrgenommen wird. Der die obere Decklage tragende Aufbau, der die übrigen Lagen des Bauteils umfasst, ist für den Benutzer auf diese Weise nicht mehr als Teil der Platte wahrnehmbar, sondern wird, so überhaupt sichtbar, allenfalls als Sockel wahrgenommen. Dieser Eindruck kann dadurch noch verstärkt werden, dass die obere Decklage anders, insbesondere mit einem anderen Material, beschichtet wird als der übrige Teil des Bauteils. Gleichzeitig hat das Bauteil beim Einsatz als Küchenarbeitsplatte weiterhin die positiven Eigenschaften, insbesondere die Stabilität, einer herkömmlichen Leichtbauplatte.

Gemäß einer Ausgestaltung der erfindungsgemäßen Leichtbauplatte weist die Mittellage einen oder mehrere Riegel auf, die vorzugsweise über die gesamte Breite oder Länge des Bauteils verlaufen. Bei mindestens einem Riegel kann eine von der Mitte des Bauteils abgewandte Seite des Riegels zumindest einen Teil der Stirnkante der Mittellage bilden. Bei einer Leichtbauplatte ist ein Riegel insbesondere dann von Vorteil, wenn die unterhalb der oberen Decklage angeordneten Lagen der Umgebung ausgesetzt sind und insbesondere einen Sockel bilden. In diesem Fall erhöht der Riegel nicht nur die Stabilität der unterhalb der oberen Decklage angeordneten Lagen, insbesondere der Mittellage, sondern schützt diese auch vor Feuchtigkeit und Stößen. Ein Riegel kann auch, wie im Folgenden noch beschrieben wird, dazu verwendet werden, die Beschichtung, insbesondere ein Profil, auf die Mittellage aufzubringen. Es ist aber auch denkbar, das Bauteil, das heißt die Leichtbauplatte, ohne Riegel auszuführen.

Gemäß noch einer weiteren Ausgestaltung der erfindungsgemäßen Leichtbauplatte ist die obere Decklage zumindest abschnittsweise, insbesondere zumindest an einem oder mehreren der freiliegenden Abschnitte, beschichtet. Mit den freiliegenden Abschnitten sind die Abschnitte der oberen Decklage gemeint, die der Umgebung ausgesetzt sind und nicht von der Mittellage abgedeckt sind. Es ist aber auch denkbar, dass die obere Decklage vollständig beschichtet ist. Vorzugsweise sind zumindest diejenigen Abschnitte beschichtet, die für den Benutzer sichtbar sind und mit Feuchtigkeit und Schmutz in Kontakt kommen, also insbesondere die Oberseite und die Stirnkante der oberen Decklage.

Erfindungsgemäß ist wie gesagt die Stirnkante der Mittellage bzw. - wenn ein Riegel die Mittellage abschließt - die die Stirnkante bildende Seite des Riegels der Mittellage beschichtet. Dabei sind sämtliche Stirnkanten der unterhalb der oberen Decklage angeordneten Lagen jeweils beschichtet. Diese Beschichtung kann wie gesagt den Eindruck einer dünnen Optik verstärken, da der unterhalb der oberen Decklage angeordnete Teil des Bauteils somit optisch deutlich gegenüber der oberen Decklage abgesetzt ist.

Gemäß einer weiteren Ausgestaltung der erfindungsgemäßen Leichtbauplatte weisen zumindest einige der beschichteten Abschnitte der oberen Decklage und/oder der unterhalb der oberen Decklage angeordneten Lagen unterschiedliche Beschichtungen auf. Es können aber sowohl an der oberen Decklage als auch an den unterhalb der oberen Decklage angeordneten Lagen Abschnitte mit der gleichen Beschichtung vorgesehen sein. Vorzugsweise weisen die Stirnkanten der unterhalb der oberen Decklage angeordneten Lagen eine gemeinsame Beschichtung auf, also eine.Beschichtung, die insbesondere durchgängig vorgesehen ist.

Es sind verschiedene Möglichkeiten denkbar, die Beschichtung zu bilden.

So kann die Beschichtung gemäß einer ersten Alternative von einem LED-Band gebildet werden, also einem festen oder flexiblen Streifen, beispielsweise Kunststoffstreifen, in den eine Vielzahl von LEDs, fertig verdrahtet, eingebettet ist.

Die Beschichtung kann aber auch von einem Profil gebildet werden, wobei das Profil vorzugsweise einen die Stirnkanten der unterhalb der oberen Decklage angeordneten Lagen abdeckenden Teil aufweist. In diesem Fall ist ein Riegel zum Schutz der Mittellage, insbesondere im Falle einer Leichtbauplatte, nicht mehr nötig, kann aber aus Stabilitätsgründen dennoch vorgesehen sein. Das Profil kann einen zur Mitte des Bauteils weisenden Vorsprung, der insbesondere zumindest an einer Seite, beispielsweise der zur unteren Decklage gewandten Seite, gezahnt ist und vorzugsweise zwischen der Mittellage und der unteren Decklage angeordnet ist, aufweisen. Mit einem solchen Vorsprung kann das Profil optimal in dem Bauteil, das heißt der Leichtbauplatte, fixiert werden. Dabei kann das Profil auch einen von der Mitte des Bauteils wegweisenden Vorsprung aufweisen, der insbesondere an der Unterseite der oberen Decklage anliegt. Dieser Vorsprung, der vorzugsweise elastisch ausgebildet ist, bildet vorzugsweise eine Dichtlippe und verhindert das Eindringen von Schmutz und Feuchtigkeit ins Innere des Bauteils, insbesondere in die Mittellage. Auch kann vorgesehen sein, dass das Profil in eine Nut an der Unterseite der oberen Decklage eingreift, was einerseits eine verbesserte Fixierung des Profils an dem Bauteil und andererseits auch eine Abdichtung gewährleistet.

Bei der letztgenannten Alternative der erfindungsgemäßen Leichtbauplatte sind LEDs in die Beschichtung, die von dem Profil gebildet wird, integriert. Dabei kann es sich um einzelne LEDs handeln, aber auch um ein wie zuvor beschriebenes LED-Band. Insbesondere bei einer Leichtbauplatte ist, im Gegensatz zu Vollspan, die Anbringung von LEDs besonders einfach, da die Netzkabel sehr leicht durch die Mittellage, insbesondere Kartonwabe, geführt werden können.

Das Material der jeweiligen Beschichtung ist gemäß wiederum einer weiteren Ausgestaltung der erfindungsgemäßen Leichtbauplatte gewählt aus der Gruppe enthaltend Glas, Metall, insbesondere Aluminium oder Chrom, Kunststoff, insbesondere ABS (Acrylnitril-Butadien-Acrylat) oder PP (Polypropylen), und Schichtstoff, insbesondere mit mindestens einem harzgetränkten Papier. Diese Materialien können optisch hochwertige sowie schlag- und kratzfeste Zierleisten bilden.

Erfindungsgemäß weist zumindest eine der Decklagen einen Holzwerkstoff, insbesondere eine Span-, Faser- oder OSB-Platte (Oriented-Strands-Board), auf.

Die Dicke zumindest der oberen Decklage, also zumindest der Decklage mit dem Überstand, kann in einem Bereich bis 16 mm, insbesondere bis 10 mm, vorzugsweise bis 6 mm, liegen. Die Länge des Überstands, d.h. des Versatzes zwischen Stirnkante der oberen Decklage und Stirnkante der Mittellage und/oder unteren Decklage, kann mindestens 10 mm, insbesondere mindestens 20 mm, vorzugsweise mindestens 40 mm, betragen. Um eine optimale Stabilität des überstehenden Teils der oberen Deckplatte zu erreichten, ist es bevorzugt, wenn die Dicke der oberen Deckplatte und die Länge des Überstands aufeinander abgestimmt sind. So ist es vorteilhaft, wenn die Länge des Überstands höchstens das 3-fache, insbesondere höchstens das 2,5-fache, vorzugsweise höchstens das 2-fache, der Dicke der oberen Deckplatte beträgt.

Gemäß noch einer weiteren Ausgestaltung der erfindungsgemäßen Leichtbauplatte weist die Mittellage eine Wabenstruktur, insbesondere Kartonwabenstruktur, und/oder einen Holzwerkstoff, der insbesondere wie zuvor beschrieben ausgebildet sein kann, auf.

Es gibt nun eine Vielzahl von Möglichkeiten, die erfindungsgemäße Leichtbauplatte auszugestalten und weiterzubilden. Hierzu sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigt:
- Fig. 1a): eine Schnittansicht einer Leichtbauplatte, die nicht Gegenstand der Erfindung ist,
- Fig. 1b): eine Schnittansicht eines ersten Ausführungsbeispiels einer Leichtbauplatte gemäß der vorliegenden Erfindung,
- Fig. 2a): eine Schnittansicht einer Leiclutbauplatte, die nicht Gegenstand der Erfindung ist,
- Fig. 2b): eine Schnittansicht eines zweiten Ausführungsbeispiels einer Leichtbauplatte gemäß der vorliegenden Erfindung, und
- Fig. 2c): eine Schnittansicht einer Leichtbauplatte, die auch nicht Gegenstand der Erfindung ist.

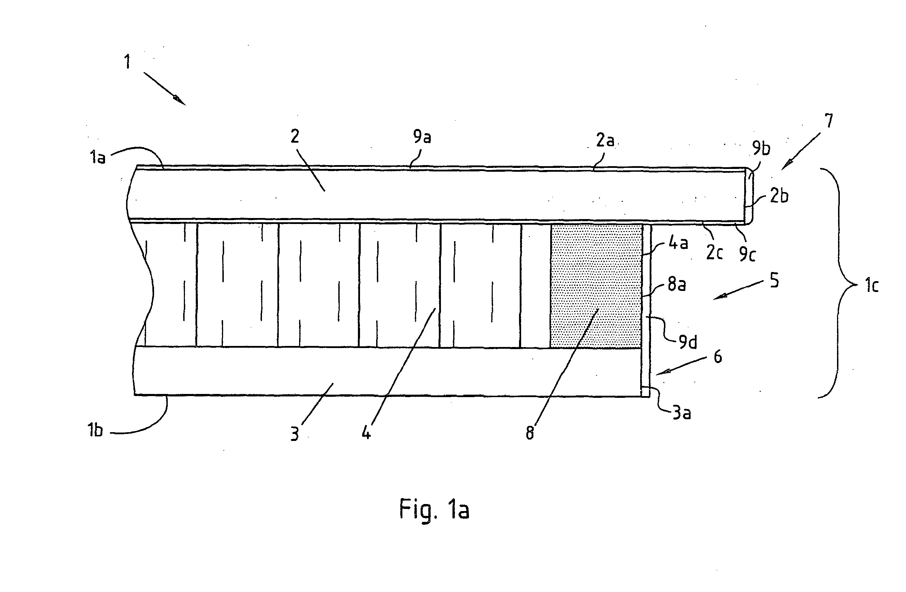

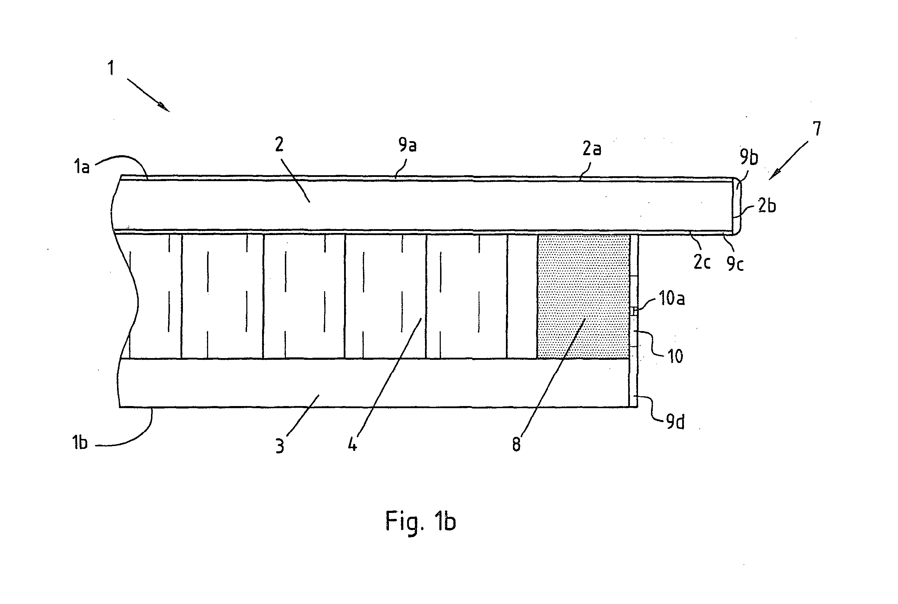

Die Figuren 1a), 2a) und 2c) dienen lediglich zum besseren Verständnis des Aufbaus einer Leichtbauplatte, sind aber nicht Gegenstand der vorliegenden Erfindung. Die Erfindung wird anhand der Figuren 1b) und 2b) näher erläutert.

In Fig. 1a) ist eine Leichtbauplatte 1 mit einer Oberseite 1a, einer Unterseite 1b und mehreren Schmalseiten 1c, von denen hier nur eine gezeigt ist, dargestellt, wobei die Leichtbauplatte eine obere Decklage 2, eine untere Decklage 3 und dazwischen eine Mittellage 4 aus einer Kartonwabenstruktur aufweist. Bestandteil der Mittellage 4 ist ferner ein im Bereich der Schmalseite 1c angeordneter Riegel 8.

An der dargestellten Schmalseite 1c der Leichtbauplatte 1 sind die Stirnkante 5 der Mittellage 4 und die Stirnkante 6 der unteren Decklage 3 vollständig gegenüber der Stirnkante 7 der oberen Decklage 2 zur Mitte der Leichtbauplatte 1 hin zurückgesetzt, so dass die obere Decklage 2 im Bereich der Schmalseite 1c gegenüber den übrigen Lagen 3 und 4 nach außen, hier nach rechts, hervorsteht.

Eine von der Mitte der Leichtbauplatte 1 abgewandte Seite 8a des Riegels 8 bildet in diesem Beispiel die Stirnkante 5 der Mittellage 4.

Die obere Decklage 2 ist an den freiliegenden Abschnitten 2a, 2b und 2c, das heißt ihrer Oberseite, ihrer Stirnkante und dem hervorstehenden Teil ihrer Unterseite, mit jeweils unterschiedlichen Beschichtungen versehen. Die Oberseite 1a der Leichtbauplatte 1 bzw. die Oberseite 2a der oberen Decklage 2 ist mit einem ersten Schichtstoff 9a, die Stirnkante mit einer Sicherheitskante 9b aus ABS und die Unterseite 2c mit einem zweiten Schichtstoff 9c versehen. Die Stirnkanten 5 und 6 der übrigen Lagen 3 und 4 sind mit einer gemeinsamen Beschichtung 9d, nämlich ebenfalls einer Sicherheitskante aus ABS, beschichtet.

Die Abmessungen des erfindungsgemäßen Bauteils, nämlich der Leichtbauplatte 1, können wie folgt gewählt werden. Der Versatz zwischen der Stirnkante 7 der oberen Decklage 2 und den Stirnkanten 5 und 6 der übrigen Lagen 3 und 4 kann jeweils mindestens 10 mm, insbesondere mindestens 20 mm und vorzugsweise mindestens 40 mm betragen. Die Dicke der oberen Decklage 2 und/oder der unteren Decklage 3 kann mindestens 6 mm, insbesondere mindestens 10 mm und vorzugsweise mindestens 16 mm betragen. Die Dicke der Mittellage kann mindestens 10 mm, insbesondere mindestens 15 mm und vorzugsweise mindestens 20 mm betragen. In den hier dargestellten Beispielen beträgt der Versatz zwischen den Stirnkanten 7 und 5 bzw. 6 jeweils 20 mm, die Dicke der beiden Decklagen 2 und 3 jeweils 8 mm und die Dicke der Mittellage 4 22 mm.

Ein Ausführungsbeispiel gemäß der vorliegenden Erfindung zeigt Fig. 1b). Fig. 1b) unterscheidet sich von Fig. 1a) dadurch, dass in die ABS-Sicherheitskante 9d ein LED-Band 10 mit einer Vielzahl von LEDs 10a integriert ist.

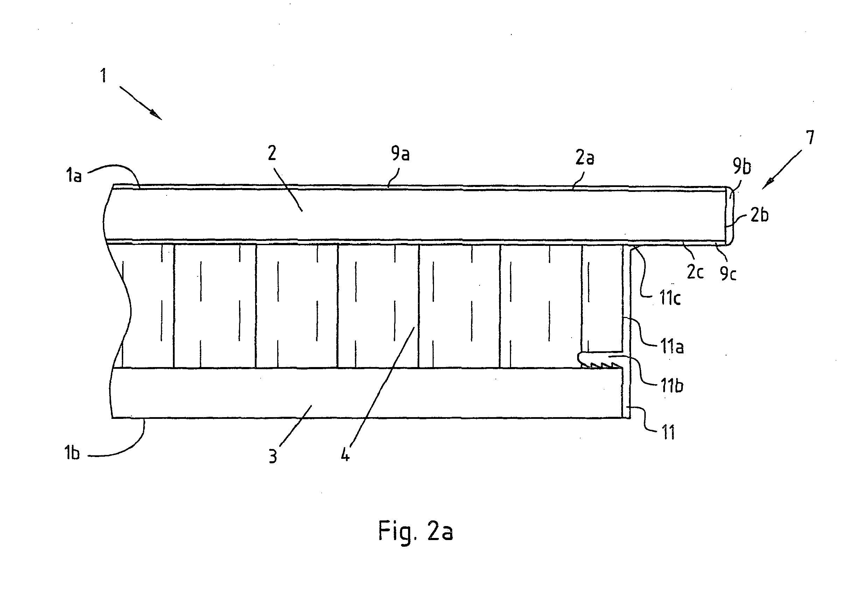

Fig. 2a) zeigt ferner ein ähnliches Beispiel einer Leichtbauplatte 1, bei der die Mittellage 4 aber keinen Riegel aufweist. Die Stirnkanten 5 und 6 der unteren Decklage 3 und der Mittellage 4 werden von einem Profil 11 abgedeckt, das einen im wesentlichen T-förmigen Querschnitt hat. Dabei erstreckt sich zum einen ein an einer Seite gezahnter erster Vorsprung 11b von dem die Stirnkanten 5 und 6 abdeckenden Teil 11a zur Mitte der Leichtbauplatte 1 hin, zum anderen erstreckt sich ein zweiter Vorsprung 11c am oberen Ende des Profils 11 von dem Teil 17a in Richtung der Außenseite der Leichtbauplatte 1. Der Vorsprung 11c ist elastisch und bildet eine Dichtlippe, die an der Unterseite der oberen Decklage 2 anliegt. Das Profil 11 ist aus einem Kunststoff gefertigt, der so steif ist, dass dieser einen Riegel ersetzen kann.

Im dargestellten Beispiel ist lediglich ein zur Mitte der Leichtbauplatte 1 weisender Vorsprung 11d vorgesehen. Es ist aber auch denkbar, dass noch ein weiterer, paralleler Vorsprung auf der dem die Dichtlippe bildenden Vorsprung gegenüberliegenden Seite vorgesehen ist, der ebenfalls gezahnt sein kann. Bei zwei Vorsprüngen kann das Profil noch besser verankert werden.

Die Abmessungen dieses Beispiels stimmen mit den Abmessungen des in Fig. 1a) gezeigten Beispiels überein.

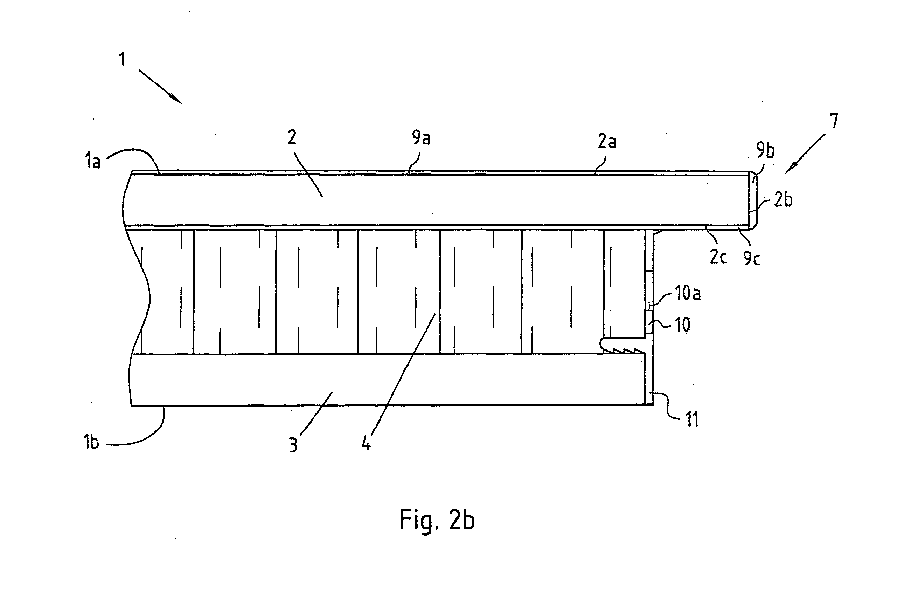

Das in Fig. 2b) gezeigte erfindungsgemäße weitere Ausführungsbeispiel entspricht im Wesentlichen dem in Fig. 2a) dargestellten Beispiel, mit dem Unterschied, dass in das Profil 11 zusätzlich noch ein LED-Band 10 mit mehreren LEDs 10a integriert ist.

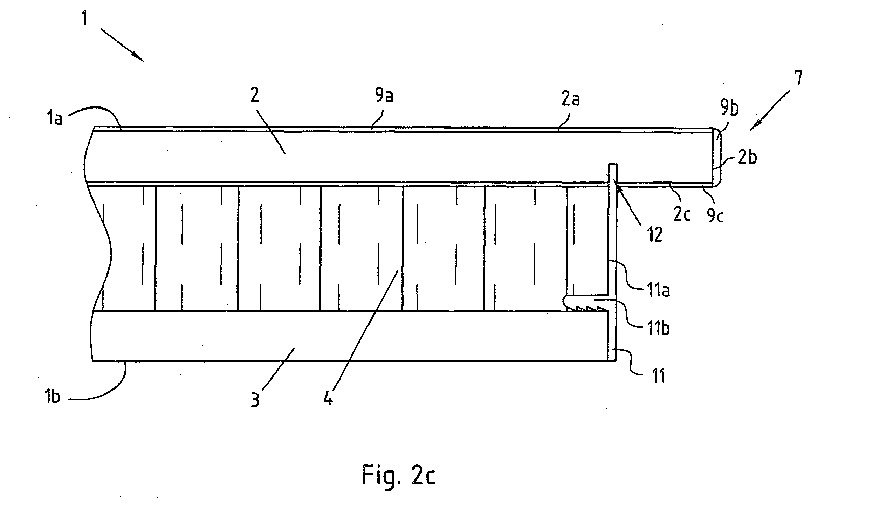

Schließlich entspricht das in Fig. 2c) gezeigte Beispiel ebenfalls im Wesentlichen dem in Fig. 2a) dargestellten Beispiel, hier jedoch mit dem Unterschied, dass das Profil 11 keinen zweiten Vorsprung 11c am oberen Ende aufweist, sondern mit seinem oberen Ende von unten in eine entsprechende Nut 12, die unterseitig in der oberen Decklage 2 vorgesehen ist, eingreift.

Ein LED-Band 10 mit mehreren LEDs 10a, wie dies in Fig 2b) gezeigt ist, kann selbstverständlich auch bei dem in Fig. 2c) gezeigten Profil vorgesehen sein.

## Patentansprüche

1. Leichtbauplatte (1) mit einer Oberseite (1a), einer Unterseite (1b) und mehreren Schmalseiten (1c), enthaltend:
- eine obere Decklage (2),
- eine untere Decklage (3), und
- eine zwischen der oberen Decklage (2) und der unteren Decklage (3) angeordnete Mittellage (4),
- wobei zumindest eine der Decklagen (2,3) einen Holzwerkstoff aufweist,
- wobei an zumindest einer der Schmalseiten (1c) des Bauteils die Stirnkanten (5,6) der unterhalb der oberen Decklage (2) angeordneten Lagen (3,4) zumindest abschnittsweise gegenüber der Stirnkante (7) der oberen Decklage (2) zur Mitte des Bauteils hin zurückgesetzt sind und
- wobei die Stirnkanten (5,6) der unterhalb der oberen Decklage (2) angeordneten Lagen (3,4) jeweils beschichtet sind, **dadurch gekennzeichnet, dass** die Beschichtung (9d) von einem LED-Band (10) oder einem integrierte LEDs (10a) aufweisenden Profil (11) gebildet wird.

2. Leichtbauplatte (1) nach Anspruch 1, **dadurch gekennzeichnet, dass** die Mittellage (4) einen oder mehrere Riegel (8) aufweist, die vorzugsweise über die gesamte Breite oder Länge der Leichtbauplatte (1) verlaufen, wobei insbesondere bei mindestens einem Riegel (8) eine von der Mitte der Leichtbauplatte (1) abgewandte Seite (8a) des Riegels (8) zumindest einen Teil der Stirnkante (5) der Mittellage (4) bildet.

3. Leichtbauplatte (1) nach einem der vorangehenden Ansprüche, **dadurch gekennzeichnet, dass** die obere Decklage (2) zumindest abschnittsweise, insbesondere zumindest an einem oder mehreren freiliegenden Abschnitten (2a,2b,2c), vorzugsweise vollständig, beschichtet ist.

4. Leichtbauplatte (1) nach einem der vorangehenden Ansprüche, **dadurch gekennzeichnet, dass** das Profil (11) einen zur Mitte des Bauteils weisenden Vorsprung (11b) aufweist, der insbesondere zumindest an einer Seite gezahnt ist und vorzugsweise zwischen der Mittellage (4) und der unteren Decklage (3) angeordnet ist.

5. Leichtbauplatte (1) nach einem der vorangehenden Ansprüche, **dadurch gekennzeichnet, dass** das Profil (11) einen von der Mitte des Bauteils wegweisenden Vorsprung (11c) aufweist, der insbesondere an der Unterseite der oberen Decklage (2) anliegt.

6. Leichtbauplatte (1) nach einem der vorangehenden Ansprüche, **dadurch gekennzeichnet, dass** das Profil (11) in eine Nut (12) an der Unterseite der oberen Decklage (2) eingreift.

7. Leichtbauplatte (1) nach einem der vorangehenden Ansprüche, **dadurch gekennzeichnet, dass** das Material der jeweiligen Beschichtung (9a,9b,9c,9d) gewählt ist aus der Gruppe enthaltend Glas, Metall, insbesondere Aluminium oder Chrom, Kunststoff, insbesondere ABS oder PP, und Schichtstoff, insbesondere mit mindestens einem harzgetränkten Papier.

8. Leichtbauplatte (1) nach einem der vorangehenden Ansprüche, **dadurch gekennzeichnet, dass** die Mittellage (4) eine Wabenstruktur, insbesondere Kartonwabenstruktur, und/oder einen Holzwerkstoff aufweist.

## Claims

1. A lightweight board (1), having an upper side (1a), an underside (1b) and a plurality of narrow sides (1c), containing:
- an upper covering layer (2),
- a lower covering layer (3), and
- a centre layer (4) arranged between the upper covering layer (2) and the lower covering layer (3),
- wherein at least one of the covering layers (2, 3) has a wood-based material,
- wherein on at least one of the narrow sides (1c) of the structural component the end edges (5, 6) of the layers (3, 4) arranged underneath the upper covering layer (2) are set back towards the centre of the structural component in relation to the end edge (7) of the upper covering layer (2), at least in some sections, and
- wherein the end edges (5, 6) of the layers (3, 4) arranged underneath the upper covering layer (2) are each coated, **characterised in that** the coating (9d) is formed by an LED strip (10) or a profile (11) having integrated LEDs (10a).

2. The lightweight board (1) according to claim 1, **characterised in that** the centre layer (4) has one or more bars (8), which preferably run over the entire width or length of the lightweight board (1), wherein in particular in the case of at least one bar (8) a side (8a) of the bar (8) facing away from the centre of the lightweight board (1) forms at least part of the end edge (5) of the centre layer (4).

3. The lightweight board (1) according to any one of the preceding claims, **characterised in that** the upper covering layer (2) is coated, at least in some sections, in particular at least on one or more exposed sections (2a, 2b, 2c), preferably completely.

4. The lightweight board (1) according to any one of the preceding claims, **characterised in that** the profile (11) has a projection (11b), which points towards the centre of the structural component and in particular is toothed on at least one side and is preferably arranged between the centre layer (4) and the lower covering layer (3).

5. The lightweight board (1) according to any one of the preceding claims, **characterised in that** the profile (11) has a projection (11c), which points away from the centre of the structural component and in particular bears against the underside of the upper covering layer (2).

6. The lightweight board (1) according to any one of the preceding claims, **characterised in that** the profile (11) engages in a groove (12) on the underside of the upper covering layer (2).

7. The lightweight board (1) according to any one of the preceding claims, **characterised in that** the material of the respective coating (9a, 9b, 9c, 9d) is selected from the group containing glass, metal, in particular aluminium or chromium, plastic, in particular ABS or PP, and laminate, in particular having at least one resin-impregnated paper.

8. The lightweight board (1) according to any one of the preceding claims, **characterised in that** the centre layer (4) has a honeycomb structure, in particular cardboard honeycomb structure, and/or a wood-based material.

## Revendications

1. Panneau alvéolaire (1) avec un côté supérieur (1a), un côté inférieur (1b) et plusieurs côtés étroits (1c), comprenant :
- une couche de couverture supérieure (2),
- une couche de couverture inférieure (3), et
- une couche intermédiaire (4) agencée entre la couche de couverture supérieure (2) et la couche de couverture inférieure (3),
- dans lequel au moins l'une des couches de couverture (2, 3) comporte un produit dérivé du bois,
- dans lequel, sur au moins l'un des côtés étroits (1c) de la pièce de construction, les arêtes frontales (5, 6) des couches (3, 4) disposées sous la couche de couverture supérieure (2) sont au moins par sections décalées en arrière, vers le milieu de la pièce de construction, par rapport à l'arête frontale (7) de la couche de couverture supérieure (2), et
- dans lequel les arêtes frontales (5, 6) des couches (3, 4) disposées sous la couche de couverture supérieure (2) sont respectivement revêtues, **caractérisé en ce que** le revêtement (9d) est constitué d'une bande LED (10) ou d'un profilé (11) comportant des LEDs intégrées (10a).

2. Panneau alvéolaire (1) selon la revendication 1, **caractérisé en ce que** la couche intermédiaire (4) comporte un ou plusieurs verrous (8) s'étendant de préférence sur toute la largeur ou longueur du panneau alvéolaire (1), dans lequel, en particulier avec au moins un verrou (8), un côté (8a) du verrou (8) détourné du milieu du panneau alvéolaire (1) forme au moins une partie de l'arête frontale (5) de la couche intermédiaire (4).

3. Panneau alvéolaire (1) selon l'une des revendications précédentes, **caractérisé en ce que** la couche de couverture supérieure (2) est revêtue au moins par sections, en particulier au moins sur une ou plusieurs sections nues (2a, 2b, 2c), de préférence entièrement.

4. Panneau alvéolaire (1) selon l'une des revendications précédentes, **caractérisé en ce que** le profilé (11) comporte une saillie (11b) dirigée vers le milieu de la pièce de construction, laquelle est dentée, en particulier au moins d'un côté, et de préférence agencée entre la couche intermédiaire (4) et la couche de couverture inférieure (3).

5. Panneau alvéolaire (1) selon l'une des revendications précédentes, **caractérisé en ce que** le profilé (11) comporte une saillie (11c) détournée du milieu de la pièce de construction, laquelle s'applique en particulier contre le côté inférieur de la couche de couverture supérieure (2).

6. Panneau alvéolaire (1) selon l'une des revendications précédentes, **caractérisé en ce que** le profilé (11) s'engage dans une rainure (12) située du côté inférieur de la couche de couverture supérieure (2).

7. Panneau alvéolaire (1) selon l'une des revendications précédentes, **caractérisé en ce que** le matériau du revêtement respectif (9a, 9b, 9c, 9d) est sélectionné parmi le groupe comprenant le verre, le métal, en particulier l'aluminium ou le chrome, le plastique, en particulier l'ABS ou le PP, et les stratifiés, en particulier avec au moins un papier imprégné de résine.

8. Panneau alvéolaire (1) selon l'une des revendications précédentes, **caractérisé en ce que** la couche intermédiaire (4) comporte une structure alvéolaire, en particulier une structure d'alvéoles en carton et/ou un produit dérivé du bois.
